Europäisches Patentamt

European Patent Office

Office européen des brevets

(19)

(11) EP 0 415 405 B1

(12) **EUROPEAN PATENT SPECIFICATION**

(45) Date of publication and mention
of the grant of the patent:
**20.03.1996 Bulletin 1996/12**

(51) Int Cl.6: **G01S 7/48**

(21) Application number: **90116646.2**

(22) Date of filing: **30.08.1990**

(54) **Device for obtaining distance information from an object by instantaneously illuminating the object by a light beam**

Gerät zur Beschaffung von Abstandsinformation von einem Objekt, mittels augenblicklicher Beleuchtung des Objekts durch einen Lichtstrahl

Dispositif pour obtenir une information de distance d'un objet, employant l'illumination instantanée de l'objet d'un faisceau lumineux

(84) Designated Contracting States:
**DE FR GB IT**

(30) Priority: **31.08.1989 JP 222994/89**

(43) Date of publication of application:
**06.03.1991 Bulletin 1991/10**

(73) Proprietor: **NEC CORPORATION
Tokyo (JP)**

(72) Inventors:
• **Tajima, Johji, c/o NEC Corporation
Minato-ku, Tokyo (JP)**

• **Sakamoto, Shizuo, c/o NEC Corporation
Minato-ku, Tokyo (JP)**

(74) Representative: **VOSSIUS & PARTNER
Postfach 86 07 67
D-81634 München (DE)**

(56) References cited:
| | |
|---|---|
| EP-A- 0 302 512 | DE-A- 3 844 654 |
| GB-A- 1 332 291 | US-A- 3 899 250 |
| US-A- 4 174 524 | US-A- 4 603 973 |
| US-A- 4 647 199 | US-A- 4 727 259 |

• PATENT ABSTRACTS OF JAPAN, vol. 9, no. 210 (P-383)[1933], 28th August 1985; & JP-A-60 071 974 (MITSUBISHI DENKI) 23-04-1985
• PATENT ABSTRACTS OF JAPAN, vol. 2, no. 11, 26th January 1978, page 10482 E 77; & JP-A-52 127 378 (MITSUBISHI DENKI K.K.) 25-10-1977

## Description

This invention relates to a distance information obtaining device for use in obtaining distance information related to a distance between the device and an object having a bulk.

A distance information obtaining device of the type described, is disclosed in an article which is published by Johji Tajima, the instant inventor, under the title of "Rainbow Range Finder Principle for Range Data Acquisition" in "International Workshop on Industrial Application of Machine Vision and Machine Intelligence" held by IEEE in 1987, pages 381 to 386. The range finder is used as the distance information obtaining device.

Other distance information obtaining devices of the type described are disclosed in EP-A-0 302 512 and US-A-4 727 259.

In order to deal with the object by using, for example, a robot arm or magic hand, it is necessary to sense three dimensional distance information from an observation position or a predetermined position to each point on the object. A distance information obtaining device is for obtaining the distance information by using a picture signal of the object. The distance information obtaining device is also used in obtaining the distance information when the object is a human body.

The distance information obtaining device comprises an optical beam generator, such as a lamp, for generating an optical beam having a plurality of wavelength components. In other words, the optical beam is a white light or the daylight. Supplied with the optical beam, a diffraction grating illuminates the object by a monochromatic beam having a selected one of the wavelength components. Thus, the diffraction grating serves as an illuminating unit for illuminating the object by the monochromatic beam.

An image pickup device, such as a color television camera, is located at the observation or predetermined position. The image pickup device picks up an optical image of the object and produces a picture signal. Connected to the image pickup device, a processing unit processes the picture signal into a processed signal representative of the distance information in the manner which will later be described.

On obtaining the distance information by a conventional distance information obtaining device, it is necessary to prepare a special environment in which environment light of the object is cut off. In order to avoid preparing the special environment, the optical beam generator may be made to generate the optical beam having an intensity which is higher than that of the environment light of the object. When the object is a human body, illuminating the human body by the optical beam of high intensity for a long time has a harmful influence on the human body.

It is therefore an object of this invention to provide a distance information obtaining device which is capable of obtaining distance information without preparing a special environment in which environment light of an object is cut off.

It is another object of this invention to provide a distance information obtaining device of the type described, which is capable of obtaining distance information by instantaneously illuminating an object.

It is still another object of this invention to provide a distance information obtaining device of the type described, which is capable of obtaining distance information by instantaneously illuminating the object by an optical beam of high intensity.

It is a further object of this invention to provide a distance information obtaining device of the type described, which can avoid a harmful influence on the object when the object is a human body.

These objects are solved with the features of the claims.

On describing the gist of this invention, it is possible to understand that a distance information obtaining device is for obtaining distance information related to a distance between a predetermined position and an object. The device includes optical beam generating means for generating an optical beam having a plurality of wavelength components, illuminating means supplied with said optical beam for illuminating the object by a monochromatic beam having a selected one of the wavelength components, image pickup means located at the predetermined position for picking up an optical image of the object to produce a picture signal, and processing means connected to the image pickup means for processing the picture signal into a processed signal representative of the distance information.

According to this invention, the above-understood device comprises: activating means connected to the optical beam generating means and the image pickup means for simultaneously activating the optical beam generating means and the image pickup means a predetermined time duration so that the optical beam generating means generates the optical beam while activated and that the image pickup means picks up the optical image of the object while activated.

Fig. 1 is a schematic top view of a conventional distance information obtaining device;

Fig. 2 shows in blocks, together with a television camera, a processing unit which is used in the distance information obtaining device illustrated in Fig. 1 and is for use in embodiments of the present invention;

Fig. 3 is a schematic top view of a distance information obtaining device according to a first embodiment of this invention;

Fig. 4 is a schematic partial top view of a distance information obtaining device according to a second embodiment of this invention;

Fig. 5 is a schematic top view of a distance information obtaining device according to a third embodiment of this invention; and

Fig. 6 is a graph for use in describing operation of the distance information obtaining devices illustrated in Figs. 3 and 5.

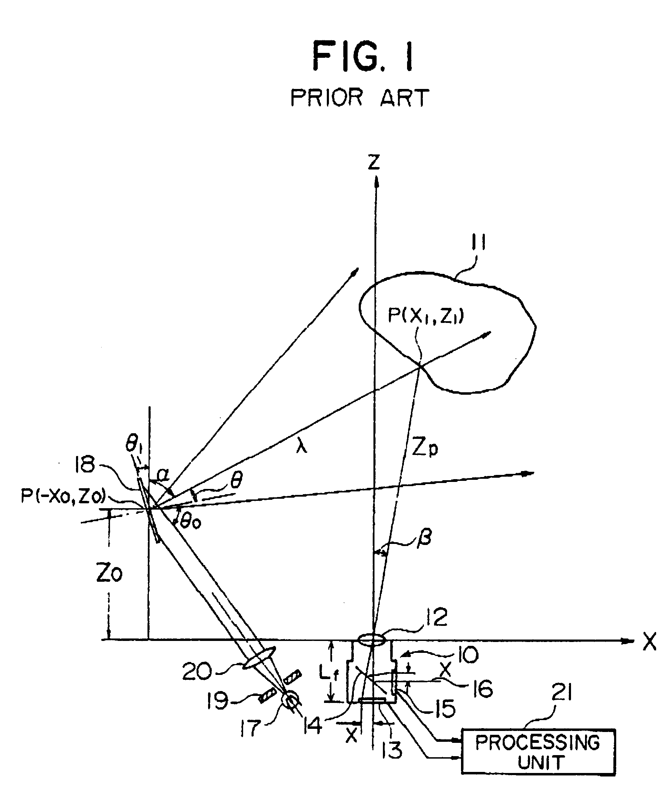

Referring to Fig. 1, a conventional distance information obtaining device will be described at first in order to facilitate an understanding of this invention. The conventional distance information obtaining device is substantially equivalent to a distance information obtaining device disclosed in United States Patent No. 4,864,395 referred to hereinabove.

The distance information obtaining device comprises, as an image pickup device, a television camera 10 having a pickup axis. An object has a position and is depicted at 11. The distance obtaining device is used in sensing a distance which will presently be more precisely defined between the television camera 10 and the object 11. Attention will be directed to a specific point P on the object 11.

On sensing the distance, the image pickup device is directed towards the object 11. More specifically, a z-axis Z is selected in coincidence with the pickup axis. A coordinate plane is defined by the z-axis Z and the specific point P. The television camera 10 comprises a light receiving lens 12 at which an x-axis X is defined on the coordinate plane perpendicular to the z-axis Z. The axes X and Z define an origin at a center point of the light receiving lens 12. The specific point P has coordinates $(X_1, Z_1)$ and will be denoted by $P(X_1, Z_1)$.

The light receiving lens 12 has a focal length $L_f$. A first photoelectric transducer 13 is arranged perpendicular to the z-axis Z at a spacing of the focal length $L_f$ from the origin. A beam splitter 14 is located between the light receiving lens 12 and the first photoelectric transducer 13.

A second photoelectric transducer 15 is arranged parallel to the z-axis Z and perpendicular to the x-axis X. In other words, the second photoelectric transducer is arranged perpendicular to a hypothetical line 16 which is parallel to the x-axis X and passes through a point of intersection between the z-axis Z and the beam splitter 14. An angle of 45° is formed between the beam splitter 14 and the hypothetical line 16. Each of the first and the second photoelectric transducers 13 and 15 is, for example, a charge-coupled image sensor.

Each of the first and the second photoelectric transducers 13 and 15 comprises a plurality of unit cells. The unit cells of the first photoelectric transducer 13 is linearly aligned parallel to the x-axis X. The unit cells of the second photoelectric transducer 15 is linearly aligned parallel to the z-axis Z. The unit cells of the first photoelectric transducer 13 correspond to the respective unit cells of the second photoelectric transducer 15 in the manner which will become clear as the description proceeds. The first and the second photoelectric transducers 13 and 15 have first and second spectral sensitivities $\sigma_1(\lambda)$ and $\sigma_2(\lambda)$ which are different from each other.

A lamp 17 generates an optical beam towards a diffraction grating 18 successively through a slit 19 and a collimator lens 20. The grating 18 has a center point having coordinates $(-X_0, Z_0)$ denoted by $P(-X_0, Z_0)$ and has a normal which is directed to the object 11 and depicted by a dash-dot line. The grating 18 therefore forms a grating angle $\theta_1$ with the z-axis Z and directs diffracted light to the object 11 with a spectral distribution so that each point of the object 11 is exposed to a monochromatic beam of a certain wavelength. The monochromatic beam of a specific wavelength $\lambda$ reaches the specific point $P(x_1, Z_1)$ forming a beam angle $\theta$ with the normal of the grating 18 and a first angle $\alpha$ with the z-axis Z.

Towards the television camera 10, the specific point $P(X_1, Z_1)$ reflects the monochromatic beam as a reflected beam which forms a second angle $\beta$ with the z-axis Z. In the television camera 10, the reflected beam falls on a specific unit cell of each of the first and the second photoelectric transducers 13 and 15. Supposing that the specific unit cell of the first photoelectric transducer 13 is positioned at a cell distance x from the z-axis Z, the specific unit cell of the second photoelectric transducer 15 is positioned at the cell distance x from the hypothetical line 16.

In the manner described above, it is necessary for the distance information obtaining device to sense the distance between the television camera 10 and the object 11. More exactly, the distance is between the origin and the specific point $P(x_1, Z_1)$ and will be noted by $z_p$. The distance $Z_p$ has a z distance component $Z_1$ given by:

$$Z_1 = (X_0 - Z_0 \tan\alpha)/(\tan\beta - \tan\alpha), \qquad (1)$$

where the first angle $\alpha$ is calculated by using the grating angle $\theta_1$ and the beam angle $\theta$. The second angle $\beta$ is calculated by using the cell distance x and the focal length $L_f$. The distance $Z_p$ has an x distance component $X_1$ given by:

$$X_1 = \tan\beta \cdot (X_0 - Z_0 \tan\alpha)/(\tan\beta - \tan\alpha). \qquad (1)'$$

It is, however, necessary on calculating the first angle $\alpha$ to preliminarily calculate the beam angle $\theta$. In order to know the beam angle $\theta$, the specific wavelength $\lambda$ is searched at first by using the reflected beam. More specifically, the first and the second photoelectric transducers 13 and 15 produce first and second object picture signals of first and second levels $I_1$ and $I_2$ in response to the reflected beam. The first and the second levels $I_1$ and $I_2$ have a level rate R defined and given by:

$$R \equiv I_1/(I_1 + I_2) \tag{2}$$

$$= \sigma_1(\lambda)/[\sigma_1(\lambda) + \sigma_2(\lambda)]. \tag{2}'$$

It is therefore possible to search the specific wavelength $\lambda$ by using the level rate R provided that each of the first and the second sensitivities $\sigma_1(\lambda)$ and $\sigma_2(\lambda)$ is a monotone function of the wavelength $\lambda$. For example, the first and the second spectral sensitivities $\sigma_1(\lambda)$ and $\sigma_2(\lambda)$ are monotonously increasing and monotonously decreasing functions, respectively. Each of the monotonously increasing and the monotonously decreasing functions is, for example, a linear function.

The beam angle $\theta$ is now calculated according to:

$$\sin\theta_0 - \sin\theta = \pm n\lambda/d, \tag{3}$$

where $\theta_0$ represents an angle of incidence of the optical beam on the grating 18, d represents a grating constant of the grating 18, and n represents a natural number which represents an order of diffraction and is usually equal to unity.

Connected to the first and the second photoelectric transducers 13 and 15, a processing unit 21 calculates the distance $Z_p$ by using the distances $X_1$ and $Z_1$ calculated by using the first and the second angles $\alpha$ and $\beta$ and the beam angle $\theta$ as a set of initial values. The beam angle $\theta$ is obtained by using two optical images which the specific point P $(X_1, Z_1)$ produces on the first and the second photoelectric transducers 13 and 15. The processing unit 21 calculates distances for various other points on the object 11.

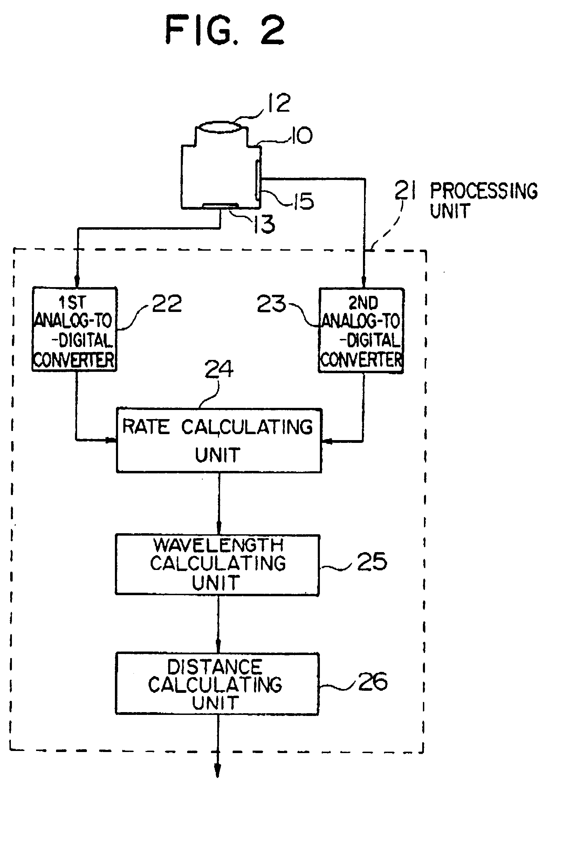

Turning to Fig. 2, the processing unit 21 comprises first and second analog-to-digital converters 22 and 23 connected to the first and the second photoelectric transducers 13 and 15, respectively. The first and the second analog-to-digital converters 22 and 23 are for converting the first and the second object picture signals having the first and the second levels $I_1$ and $I_2$ into first and second digital signals, respectively.

A rate calculating unit 24 is connected to the first and the second analog-to-digital converters 22 and 23. Responsive to the first and the second digital signals, the rate calculating unit 24 calculates the level rate R in accordance with Equation (2) and produces a level rate signal representative of the level rate R.

A wavelength calculating unit 25 is connected to the rate calculating unit 24. Responsive to the level rate signal, the wavelength calculating unit 25 calculates the specific wavelength $\lambda$ in accordance with Equation (2)'. More specifically, the wavelength calculating unit 25 searches the specific wavelength $\lambda$ by using the level rate R provided that each of the first and the second sensitivities $\sigma_1(\lambda)$ and $\sigma_2(\lambda)$ is a monotone function of the wavelength $\lambda$ as described above. The wavelength calculating unit 25 thereby produces a specific wavelength signal representative of the specific wavelength $\lambda$.

A distance calculating unit 26 is connected to the wavelength calculating unit 25. Responsive to the specific wavelength signal, the distance calculating unit 26 calculates the beam angle $\theta$ in compliance with Equation (3) by the use of the specific wavelength $\lambda$ and calculates the distance $z_p$ in accordance with Equations (1) and (1)'. The distance calculating unit 26 thereby produces a distance signal as a processed signal representative of the distance information related to the distance $Z_p$.

Turning back to Fig. 1 and with reference to Fig. 2 continued, operation of the distance information obtaining device will be summarized. The lamp 17 serves in combination with the slit 19 and the collimator lens 20 as an optical beam generator which generates the optical beam having a plurality of wavelength components. Supplied with the optical beam, the diffraction grating 18 serves as an illuminating unit for illuminating the object 11 by the monochromatic beam having a selected one of the wavelength components.

The television camera 10 serves as the image pickup device which is located at the predetermined position. The image pickup device picks up an optical image of the object 11 and produces a picture signal. Connected to the image pickup device, the processing unit 21 processes the picture signal into the processed signal representative of the distance information related to the distance $Z_p$ between the predetermined position and the object 11.

The illuminating unit (namely, the diffraction grating 18) is located at a predetermined distance from the predetermined position. The image pickup device comprises the first and the second photoelectric transducers 13 and 15, each comprising a plurality of the unit cells. The unit cells of the first photoelectric transducer 13 correspond to the respective unit cells of the second photoelectric transducer 15. Each of the unit cells of the first photoelectric transducer 13 has a first spectral sensitivity. Each of the unit cells of the second photoelectric transducer 15 has a second spectral sensitivity which is different from the first spectral sensitivity. A particular set of corresponding unit cells of the first and the second photoelectric transducers 13 and 15 is for transducing the optical image into first and second object picture signals with a level rate to produce the first and the second object picture signals collectively as the picture signal. The processing unit 21 processes the first and the second object picture signals into the processed signal by using the level rate and the predetermined distance.

On practically measuring the distance $Z_p$ by the conventional distance information obtaining device, a special environment should be prepared in order to cut off environment light of the object 11 in the manner described hereinabove. Alternatively, the optical beam generator may be made to generate the optical beam having an intensity which is higher than that of the environment light of the object 11. When the object 11 is a human body, illuminating the human body by the optical beam of high intensity for a long time has a harmful influence on the human body as also mentioned in the preamble of the instant specification.

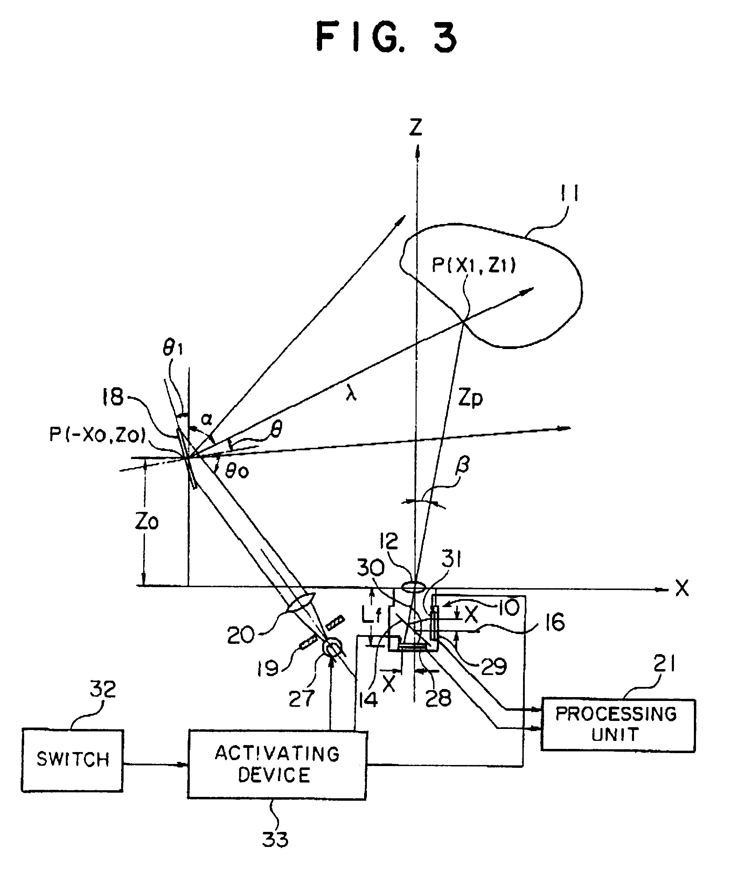

Turning to Fig. 3, a distance information obtaining device according to a first embodiment of this invention comprises similar parts designated by like reference numerals. The distance information obtaining device comprises a flash light source 27 as the optical beam generator. The flash light source 27 generates a flash light as the optical beam. The flash light has an intensity which is higher than that of the environment of the object 11.

Each of first and second photoelectric transducers 28 and 29 comprises the unit cells like in the first and the second photoelectric transducers 13 and 15. The first and the second photoelectric transducers 28 and 29 further comprise first and second electric shutters 30 and 31 formed on the unit cells of the first and the second photoelectric transducers 28 and 29. Each of the first and the second photoelectric transducers 28 and 29 is, for example, a charge-coupled image sensor with the electronic shutter 30 or 31.

A start switch 32 is for producing a start signal. An activating device 33 is connected to the flash light source 27 and the first and the second electronic shutters 30 and 31 of the first and the second photoelectric transducers 28 and 29. Responsive to the start signal, the activating device 33 simultaneously activates the flash light source 27 and the first and the second electronic shutters 30 and 31 a predetermined time duration so that the flash light source 27 generates the flash light while activated and that the first and the second electronic shutters 30 and 31 supply the optical image of the object 11 to the unit cells of the first and the second photoelectric transducers 28 and 29 while activated. As a result, the first and the second photoelectric transducers 28 and 29 transduce the optical image of the object 11 into the first and the second object picture signals while activated. In other words, the image pickup device (namely, the television camera 10) picks up the optical image of the object 11 while activated. When the first and the second electronic shutters 30 and 31 are not activated, the first and the second electronic shutters 30 and 31 cut off the optical image of the object 11.

The predetermined time duration is an instantaneous time duration which is selected between 1/1000 and 1/500 second.

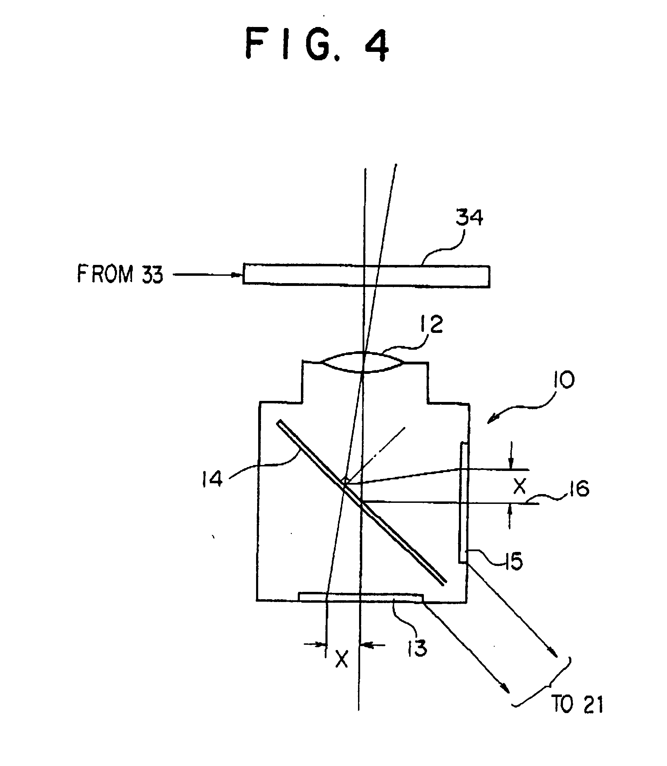

Turning to Fig. 4, a distance information obtaining device according to a second embodiment of this invention comprises similar parts designated by like reference numerals. In the example being illustrated, the image pickup device comprises the television camera 10 of the type illustrated in Fig. 1 and a pickup shutter 34 connected to the activating device 33. The pickup shutter 34 supplies the optical image of the object 11 (Fig. 3) to the first and the second photoelectric transducers 13 and 15 of the television camera 10 when the pickup shutter 34 is activated. The pickup shutter 34 cuts off the optical image of the object 11 when the pickup shutter 34 is not activated.

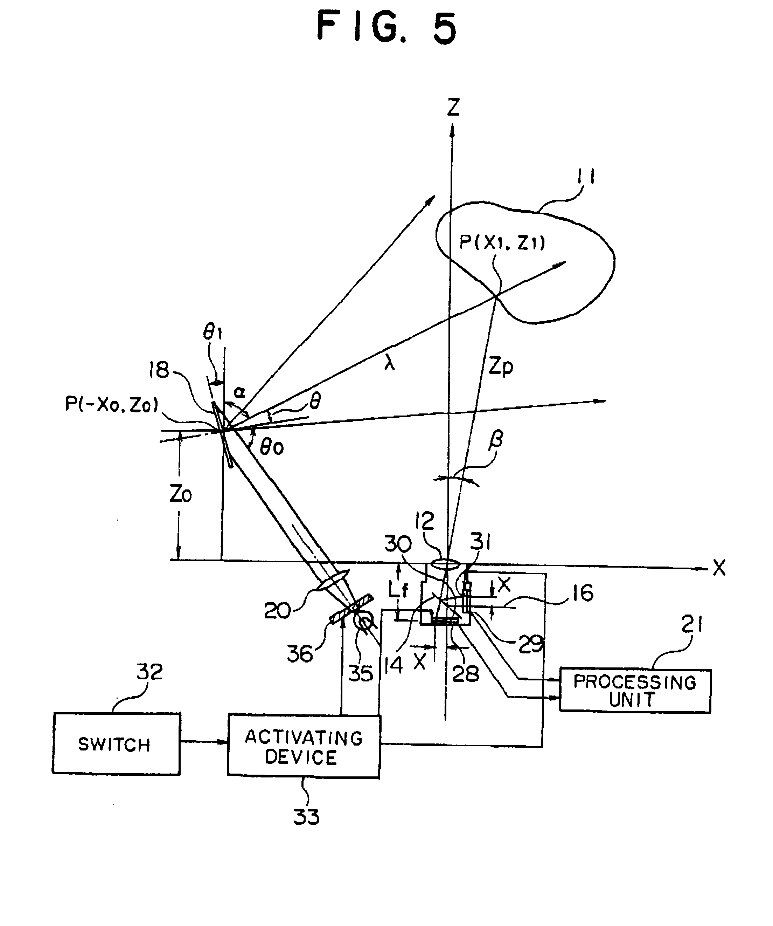

Turning to Fig. 5, the optical beam generator comprises a white or daylight light source 35, a light source shutter 36, and the collimator lens 20. The white light source 35 generates a white light or daylight as the optical beam. The light source shutter 36 is connected to the activating device 33 and supplies the white light to the illuminating unit (namely, the diffraction grating 18) when the light source shutter 36 is activated. When the light source shutter 36 is not activated, the light source shutter 36 cuts off the white light.

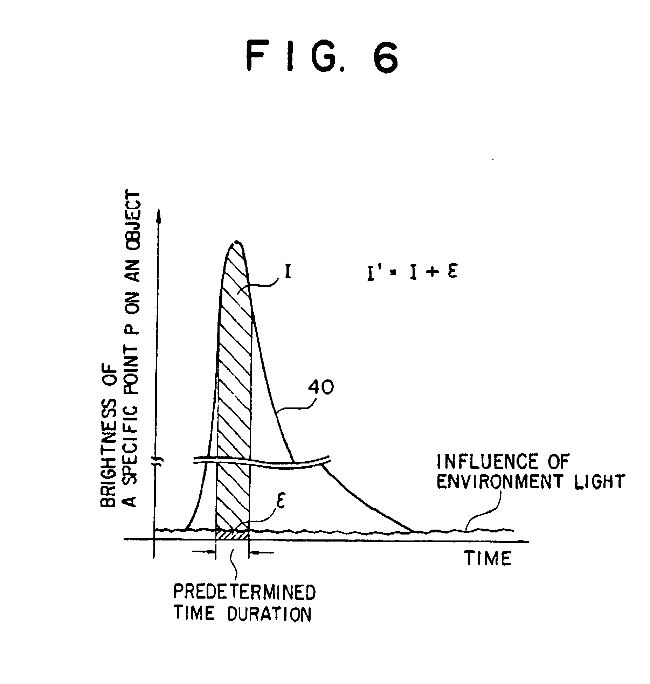

Turning to Fig. 6, description will be made more in detail as regards operation of the activating device 33 of each of the distance obtaining devices illustrated in Figs. 3 and 5. According to this invention, it is possible to measure the distance $Z_p$ with a measurement error which is substantially equal to the level rate. This is rendered possible by preliminarily determining the predetermined time duration so that influence of the environment light of the object 11 can be neglected. When brightness of the specific point P of the object 11 is graphically represented in Fig. 6 by a curve 40, another level rate $R'$ is defined by first and second levels $I'_1$ and $I'_2$ of the first and the second object picture signals produced by the first and the second photoelectric transducers 28 and 29. The level rate $R'$ is given by:

$$R' = I'_1/(I'_1 + I'_2)$$

$$= (I_1 + \varepsilon_1)/(I_1 + \varepsilon_1 + I_2 + \varepsilon_2)$$

$$\fallingdotseq I_1/(I_1 + I_2) + (-I_1\varepsilon_2 + I_2\varepsilon_1)/(I_1 + I_2)^2, \tag{4}$$

where $I_1$ and $I_2$ represent the first and the second levels, respectively, when the environment light is cut off by using the special environment and where $\varepsilon_1$ and $\varepsilon_2$ represent first and second environment levels given by the first and the second photoelectric transducers 28 and 29, respectively, when the object 11 is illuminated only by the environment light. It is assumed that $\varepsilon_1$ and $\varepsilon_2$ are negligible relative to $I_1$ and $I_2$.

Attention will be directed to the second term $(-I_1\varepsilon_2 + I_2\varepsilon_1)/(I_1 + I_2)^2$ on the right-hand side of Equation (4). The second term has an absolute value which becomes largest either when $I_1$ becomes equal to zero (that is, when the second term becomes equal to $\varepsilon_1/I_2$) or when $I_2$ becomes equal to zero (that is, when the second term becomes equal to $\varepsilon_2/I_1$). Supposing that one of the first and the second photoelectric transducers 28 and 29 is supplied with a primary quantity of light due tc the monochromatic beam and that the other of the first and the second photoelectric traneducers 28 and 29 is supplied with a secondary quantity of light due to the environment light and that the secondary quantity is k percent of the primary quantity, the level rate R' may have an error which is equal to at most k percent. Further supposing that the first and the second sensitivities $\sigma_1(\lambda)$ and $\sigma_2(\lambda)$ is a linear function as mentioned above, the first angle $\alpha$ obtained by the first and the second sensitivities $\sigma_1(\lambda)$ and $\sigma_2(\lambda)$ may have another error of at most k percent. As a result, the measurement error is obtained by:

$$dz \fallingdotseq \frac{Z - Z_0}{(\tan\beta - \tan\alpha)\cos^2\alpha} \, d\alpha. \tag{5}$$

Presuming in Equation (5) that a value $(-Z_0)$ is negligible by locating the diffraction grating 18 near the x-axis X, the measurement error dz of Equation (5) is m times as small as the distance $Z_1$ of Equation (1), where m is given by:

$$m = \frac{d\alpha}{(\tan\beta - \tan\alpha)\cos^2\alpha} \, , \tag{6}$$

and is very small.

Further presuming that the diffraction grating 18, the object 11, and the television camera 10 are located at positions so that a specific value $(\tan\beta - \tan\alpha)\cos^2\alpha$ of Equation (6) is approximately equal to unity, the measurement error may be at most k percent. At any rate, the distance $Z_P$ can be measured at the measurement error of k percent or less.

## Claims

1. A distance information obtaining device for obtaining distance information related to a distance between a predetermined position and an object (11), comprising

   (a) optical beam generating means (27) for generating an optical beam having a plurality of wavelength components,
   (b) illuminating means (18) supplied with said optical beam for illuminating said object by a monochromatic beam of a selected one of said wavelength components(l),
   (c) image pick-up means (12,13-15,28-29) at said predetermined position for picking up an optical image of said object to produce a picture signal, and
   (d) processing means (21) connected to said image pick-up means for processing said picture signal into a processed signal representative of said distance,
       characterised by
   (e) activating means (33) connected to said optical beam generating means (27) and said image pick-up means (12,13-15,28-29) for simultaneously activating said optical beam generating means and said image pick-up means a predetermined time duration such that said image pick-up means produces said picture signal including a component ($\varepsilon$) which results from environment light illuminating said object and wherein the ratio of the component ($\varepsilon$) to said selected one of said wavelength components (l) determines the maximum of the measurement error of said distance information.

2. A device as claimed in Claim 1, characterised in that said optical beam generating means (27) generates said optical beam with an intensity which is higher than that of said environment light.

3. A device as claimed in Claim 1 or 2, characterised in that said optical beam generating means (27) comprises a white light source (27).

4. A device as claimed in any one of Claims 1 to 3, characterised in that said predetermined time duration is predetermined between 1/1000 and 1/500 second.

5. A device as claimed in any one of Claims 1 to 4, said illuminating means (18) being a predetermined distance spaced from said predetermined position, said image pickup means (12, 28-29) comprising first (28) and second (29) transducing means, each comprising a plurality of unit cells, the unit cells of said first transducing means corresponding to the unit cells of said second transducing means, each of the unit cells of said first transducing means having a first spectral sensitivity, each of the unit cells of said second transducing means having a second spectral sensitivity which is different from said first spectral sensitivity, one of the unit cells of said first transducing means and a corresponding one of the unit cells of said second transducing means being for transducing said optical image into first and second object signals with a level rate to produce said first and said second object signals collectively as said

EP 0 415 405 B1

picture signal, said processing means (21) processing said first and said second object signals into said processed signal by using said predetermined distance and said level rates, wherein said activating means (33) is connected to said optical beam generating means (27) and said first (28) and said second (29) transducing means for simultaneously activating said optical beam generating means and said first and said second transducing means during said predetermined duration.

6. A device as claimed in Claim 5, comprising first (30) and second (31) electronic shutter means controlled by said activating means (33) for shutting supply of first and second beams from said object (11) to said first and said second image pickup means while said activating means does not activate said optical beam generating means.

7. A device as claimed in Claim 6, said activating means (33) causing first and second beams from said object (11) and received by said first (28) and said second (29) pickup means with first and second quantities of light when said activating means activates said optical beam generating means, wherein, if one of said first or second quantity of light is only environment light, said second quantity of light is k percent of said first quantity of light, where k represents a predetermined percentage allowed for said measurement error.


**Patentansprüche**

1. Abstandsinformation-Beschaffungsvorrichtung zum Beschaffen von Abstandsinformation, die sich auf einen Abstand zwischen einer vorbestimmten Position und einem Objekt (11) bezieht, mit:

(a) einer optischen Strahlerzeugungseinrichtung (27) zum Erzeugen eines optischen Strahls (27), der mehrere Wellenlängenkomponenten aufweist,
(b) einer Beleuchtungseinrichtung (18), die mit dem optischen Strahl zum Beleuchten des Objekts mit einem monochromatischen Strahl einer ausgewählten Wellenlängenkomponente (I) beliefert wird,
(c) einer Abbildungsaufnahmeeinrichtung (12, 13-15, 28-29) an der vorbestimmten Position zum Aufnehmen einer optischen Abbildung des Objekts, um ein Bildsignal zu erzeugen, und
(d) einer mit der Abbildungsaufnahmeeinrichtung verbundenen Verarbeitungseinrichtung (21) zum Verarbeiten des Bildsignals in ein verarbeitetes Signal, das den Abstand darstellt,
         gekennzeichnet durch
(e) eine mit der optischen Strahlerzeugungseinrichtung (27) und der Abbildungsaufnahmeeinrichtung (12, 13-15, 28-29) verbundene Aktivierungseinrichtung (33), um gleichzeitig die optische Strahlerzeugungseinrichtung und die Abbildungsaufnahmeeinrichtung für eine vorbestimmte Zeitdauer so zu aktivieren, daß die Abbildungsaufnahmeeinrichtung das Bildsignal erzeugt, das eine Komponente ($\varepsilon$) enthält, welches sich aus das Objekt beleuchtendem Umgebungslicht ergibt, und wobei das Verhältnis der Komponente ($\varepsilon$) zu der ausgewählten Wellenlängenkomponente (I) das Maximum des Meßfehlers der Abstandsinformation bestimmt.

2. Vorrichtung nach Anspruch 1, dadurch gekennzeichnet, daß die optische Strahlerzeugungseinrichtung (27) den optischen Strahl mit einer Intensität erzeugt, welche höher als die des Umgebungslichtes ist.

3. Vorrichtung nach Anspruch 1 oder 2, dadurch gekennzeichnet, daß die optische Strahlerzeugungseinrichtung (27) eine Weißlichtquelle (27) aufweist.

4. Vorrichtung nach einem der Ansprüche 1 bis 3, dadurch gekennzeichnet, daß die vorbestimmte Zeitdauer zwischen einer 1/1000 und 1/500 Sekunde vorbestimmt ist.

5. Vorrichtung nach einem der Ansprüche 1 bis 4, wobei die Beleuchtungseinrichtung (18) in einem vorbestimmten Abstand von der vorbestimmten Position beabstandet ist, die Abbildungsaufnahmeeinrichtung (12, 28-29) eine erste (28) und eine zweite (29) Meßwandlereinrichtung aufweist, jede davon mehrere Einheitszellen aufweist, die Einheitszellen der ersten Meßwandlereinrichtung den Einheitszellen der zweiten Meßwandlergseinrichtung entsprechen, jede Einheitszelle der ersten Meßwandlereinrichtung eine erste spektrale Empfindlichkeit, jede Einheitszelle der zweiten Meßwandlereinrichtung eine zweite spektrale Empfindlichkeit aufweist, welche sich von der ersten spektralen Empfindlichkeit unterscheidet, eine Einheitszelle der ersten Meßwandlereinrichtung und eine entsprechende der zweiten Meßwandlergseinrichtung zum Umwandeln des optischen Abbildungssignal in ein erstes und zweites Objektsignal mit einem Pegelverhältnis dient, um das erste und das zweite Objektsignal zusammen als das Bildsignal zu erzeugen, wobei die Verarbeitungseinrichtung (21) das erste und das zweite Objektsignal unter Verwendung des vorbestimmten Abstandes und der Pegelverhältnisse in das verarbeitete Signal verarbeitet, wobei die Aktivierungseinrichtung (33) mit der optischen Strahlerzeugungseinrichtung (27) und der ersten (28) und der zweiten (29) Meßwandlereinrichtung zum gleichzeitigen Aktivieren der optischen Strahlerzeugungseinrichtung und der ersten und der zweiten Meßwandlereinrichtung während der vorgegebenen Dauer verbunden ist.

6. Vorrichtung nach Anspruch 5 mit einer ersten (30) und zweiten (31) elektronischen Verschlußeinrichtung gesteuert von der Aktivierungseinrichtung (33) zum Unterbrechen des ersten und zweiten Strahls von dem Objekt (11) an die erste und die zweite Abbildungsaufnahmeeinrichtung, während die Aktivierungseinrichtung die optische Signalerzeugungseinrichtung nicht aktiviert.

7. Vorrichtung nach Anspruch 6, wobei die Aktivierungseinrichtung (33) erste und zweite Strahlen von dem Objekt (11), die von der ersten (28) und der zweiten (29) Abbildungsaufnahmeeinrichtung mit einer ersten und zweiten Lichtmenge aufgenommen werden, bewirkt, wenn die Aktivierungseinrichtung die optische Strahlerzeugungseinrichtung aktiviert, wobei, wenn eine von der ersten oder zweiten Lichtmenge nur das Umgebungslicht ist, die zweite Lichtmenge k Prozent der ersten Lichtmenge ist, wobei k einen vorbestimmten Prozentsatz darstellt, der für den Meßfehler zulässig ist.


## Revendications

1. Dispositif pour obtenir une information de distance, pour obtenir une information de distance en rapport avec une distance entre une position prédéterminée et un objet (11), comprenant :

(a) des moyens de génération de faisceau optique (27) pour générer un faisceau optique (27) ayant une pluralité de composantes de longueur d'onde,
(b) des moyens d'illumination (18) recevant ledit faisceau optique pour illuminer ledit objet par un faisceau monochromatique d'une composante choisie desdites composantes de longueur d'onde (l),
(c) des moyens de prise d'image (12, 13-15, 28-29) à ladite position prédéterminée pour prendre une image optique dudit objet pour produire un signal d'image, et
(d) des moyens de traitement (21) connectés auxdits moyens de prise d'image pour traiter ledit signal d'image en un signal traité représentatif de ladite distance,
  caractérisé par :
(e) des moyens d'activation (33) connectés auxdits moyens de génération de faisceau optique (27) et auxdits moyens de prise d'image (12, 13-15, 28-29) pour activer simultanément lesdits moyens de génération de faisceau optique et lesdits moyens de prise d'image pendant une durée prédéterminée de telle sorte que lesdits moyens de prise d'image produisent ledit signal d'image comportant une composante ($\varepsilon$) qui provient de la lumière de l'environnement illuminant ledit objet et dans lequel le rapport de la composante ($\varepsilon$) à ladite composante choisie desdites composantes de longueur d'onde (l) détermine le maximum de l'erreur de mesure de ladite information de distance.

2. Dispositif selon la revendication 1, caractérisé en ce que lesdits moyens de génération de faisceau optique (27) génèrent ledit faisceau optique avec une intensité qui est supérieure à celle de ladite lumière de l'environnement.

3. Dispositif selon la revendication 1 ou 2, caractérisé en ce que lesdits moyens de génération de faisceau optique (27) comprennent une source de lumière blanche (27).

4. Dispositif selon l'une quelconque des revendications 1 à 3, caractérisé en ce que ladite durée prédéterminée est prédéterminée entre 1/1000 et 1/500 de seconde.

5. Dispositif selon l'une quelconque des revendications 1 à 4, lesdits moyens d'illumination (18) étant espacés d'une distance prédéterminée par rapport à ladite position prédéterminée, lesdits moyens de prise d'image (12, 28-29) comprenant des premiers (28) et deuxièmes (29) moyens transducteurs, chacun comprenant une pluralité de cellules unitaires, les cellules unitaires desdits premiers moyens transducteurs correspondant aux cellules unitaires desdits deuxièmes moyens transducteurs, chacune des cellules unitaires desdits premiers moyens transducteurs ayant une première sensibilité spectrale, chacune des cellules unitaires desdits deuxièmes moyens transducteurs ayant une deuxième sensibilité spectrale qui est différente de ladite première sensibilité spectrale, l'une des cellules unitaires desdits premiers moyens transducteurs et une cellule unitaire correspondante des cellules unitaires desdits deuxièmes moyens transducteurs servant à transformer ladite image optique en premier et deuxième signaux de l'objet avec un rapport des niveaux pour produire ledit premier et ledit deuxième signaux de l'objet collectivement en tant que dit signal d'image, lesdits moyens de traitement (21) traitant ledit premier et ledit deuxième signaux de l'objet en ledit signal traité en utilisant ladite distance prédéterminée et ledit rapport des niveaux, dans lequel lesdits moyens d'activation (33) sont connectés auxdits moyens de génération de faisceau optique (27) et auxdits premiers (28) et auxdits deuxièmes (29) moyens transducteurs pour activer simultanément lesdits moyens de génération de faisceau optique et lesdits premiers et lesdits deuxièmes moyens transducteurs durant ladite durée prédéterminée.

6.  Dispositif selon la revendication 5, comprenant des premiers (30) et deuxièmes (31) moyens à obturateur électronique commandés par lesdits moyens d'activation (33) pour obturer la fourniture desdits premier et deuxième faisceaux provenant dudit objet (11) auxdits premiers et auxdits deuxièmes moyens de prise d'image pendant que lesdits moyens d'activation n'activent pas lesdits moyens de génération de faisceau optique.

7.  Dispositif selon la revendication 6, lesdits moyens d'activation (33) provoquant des premier et deuxième faisceaux provenant dudit objet (11) et reçus par lesdits premiers (28) et lesdits deuxièmes (29) moyens de prise d'image avec des première et deuxième quantités de lumière lorsque lesdits moyens d'activation activent lesdits moyens de génération de faisceau optique, dans lequel, si l'une desdites première et deuxième quantités de lumière est seulement la lumière de l'environnement, ladite deuxième quantité de lumière vaut k pour cent de ladite première quantité de lumière, où k représente un pourcentage prédéterminé permis pour ladite erreur de mesure.

# FIG. 1

## PRIOR ART

# FIG. 2

# FIG. 3

# FIG. 4

FROM 33 ———▶

34

12

10

14

16

15

X

X

13

TO 21

# F I G. 5

# F I G. 6

BRIGHTNESS OF
A SPECIFIC POINT P ON AN OBJECT

$I' = I + \varepsilon$

$I$

40

INFLUENCE OF
ENVIRONMENT LIGHT

$\varepsilon$

TIME

PREDETERMINED
TIME DURATION